# EUROPÄISCHE PATENTANMELDUNG

(11) **EP 2 464 201 A1**
(43) Veröffentlichungstag der Anmeldung: **13.06.2012**
(21) Anmeldenummer: 11167064.2
(22) Anmeldetag: 23.05.2011
(51) Int. Cl.: H05B 37/02, H05B 41/42, H05B 41/02

(54) **Leuchtensteuerungsmodul**

(30) Priorität: 09.12.2010 DE 102010062760
(71) Anmelder: Deutsche Post AG, 53113 Bonn (DE)
(72) Erfinder: Kügler, Maren, 50733 Köln (DE); Haasen, Christopher, 53115 Bonn (DE)
(74) Vertreter: Jostarndt, Hans-Dieter

(57) **Zusammenfassung**

Die vorliegenden Erfindung betrifft ein Steuerungsmodul (1) zum Steuern von Leuchten (2), eine Leuchte (2) mit einem solchen Steuerungsmodul (1), ein Beleuchtungssystem (4) mit Leuchten (2) mit solchen Steuerungsmodulen (1) und eine Methode zum Nachrüsten von Beleuchtungssystemen (4) mit solchen Steuerungsmodulen (1). Das Steuerungsmodul (1) umfasst dazu einen Modulleuchtensockel (12) geeignet zum Einsetzen in die Leuchtenfassung (21) und eine Modullampenfassung (13) geeignet zum Einsatz eines Sockels (31) eines Leuchtmittels (3) in die Modullampenfassung (13), wobei die Modullampenfassung (13) elektrisch mit dem Modulleuchtensockel (12) geeignet zum Betrieb eines Leuchtmittels (3) in der Modullampenfassung (13) verbunden ist, und wobei das Steuerungsmodul (1) des Weiteren einen durch akustische Signale (AS) steuerbaren Schalter (14) geeignet zum Unterbrechen der elektrischen Verbindung (11) zwischen Modulleuchtensockel (12) und Modullampenfassung (13) umfasst.

## Beschreibung

### Technisches Gebiet der Erfindung

Die Erfindung betrifft ein Steuerungsmodul zum Steuern von Leuchten, eine Leuchte mit einem solchen Steuerungsmodul, ein Beleuchtungssystem mit Leuchten mit solchen Steuerungsmodulen und eine Methode zum Nachrüsten von Beleuchtungssystemen mit solchen Steuerungsmodulen.

### Stand der Technik

Leuchten werden heutzutage in großen Stückzahlen für die Raumbeleuchtung verwendet. Dazu werden die Leuchtmittel mit Sockeln in Leuchten mit entsprechenden Leuchtenfassungen zur Aufnahme der Sockel der Leuchtmittel, gegebenenfalls zusammen mit entsprechenden Vorschaltgeräten, zum Betreiben der Leuchtmittel eingesetzt. Für die Raumbeleuchtung werden eine Vielzahl an unterschiedlichen Leuchtmitteln in unterschiedlichen Leuchten verwendet. Um Einsparungen beim Energieverbrauch für die notwendige Raumbeleuchtung erzielen zu können, werden in großen Räumen wie beispielsweise Lagerhallen als Leuchtmittel in der Regel Halogenlampen (Effizienz ca. 20 Lumen/Watt), Leuchtstofflampen (Effizienz mehr als 40 Lumen/Watt) oder Kompaktleuchtstofflampen (Effizienz bis zu 100 Lumen/Watt) statt der früher üblichen Glühlampen (Effizienz ca. 12 Lumen/Watt) verwendet. Damit kann der Energiebedarf für solche Raumbeleuchtungen beim Dauerbetrieb zwar deutlich gesenkt werden, dennoch sind die Energiekosten weiterhin hoch und es besteht der Bedarf nach einer weiteren Senkung des Energiebedarfs für Raumbeleuchtungen. Insbesondere gilt es zu vermeiden, dass Räume, insbesondere große Räume, beleuchtet werden, ohne dass es für diese Räume oder Teile dieser Räume (Zonen) einen Beleuchtungsgrund gibt, beispielsweise sich in den Räumen oder Zonen aufhaltende Personen.

Eine Raumbeleuchtung mit einer Vielzahl dieser Leuchten wird in der Regel über einen zentralen Schalter ein- bzw. ausgeschaltet. Wird beispielsweise das Ausschalten beim Verlassen des Raumes vergessen, wird der Raum lange Zeit ohne vorhandenen Grund beleuchtet, so dass der Energieaufwand für diesen Zeitraum überflüssig ist und somit hätte eingespart werden können. Beleuchtungen mit Zeitschaltuhren oder Intervallschaltern verhindern zwar eine Raumbeleuchtung über einen langen, nicht benötigten Zeitraum, erfordern aber eine Anpassung der Zeitschaltuhr bei geändertem Bedarf oder ein periodisches Anschalten der Beleuchtung für das nächste Beleuchtungsintervall bei längerem Beleuchtungsbedarf. Beide Lösungen sind umständlich, erfordern zusätzlichen Aufwand durch das Bedienpersonal beziehungsweise den Nutzer und sind daher für den Benutzer nicht wünschenswert.

Für einen effizienten Betrieb der Leuchten bei möglichst geringem Stromeinsatz wäre es wünschenswert, die Leuchten individuell automatisch für den benötigten Zeitraum schalten zu können, ohne dass durch eine entsprechende Umrüstung der Leuchte oder des Beleuchtungssystems wesentliche Zusatzkosten verursacht werden. Es ist zudem wünschenswert, dass eine solche Umrüstung von Jedermann durchgeführt werden kann.

### Zusammenfassung der Erfindung

Es ist eine Aufgabe der vorliegenden Erfindung, eine Komponente bereitzustellen, die eine individuelle Steuerung von Leuchten in einem Beleuchtungssysytem ermöglicht, ohne dass aufwendige Änderungen an den Leuchten oder an dem Beleuchtungssystem von Spezialpersonal vorgenommen werden müssen.

Diese Aufgabe wird gelöst durch ein Steuerungsmodul zum Steuern von Leuchten mit zumindest einer Leuchtenfassung, wobei das Steuerungsmodul einen Modulleuchtensockel geeignet zum Einsetzen in die Leuchtenfassung und eine Modullampenfassung geeignet zum Einsatz eines Sockels eines Leuchtmittels in die Modullampenfassung umfasst, wobei die Modullampenfassung elektrisch mit dem Modulleuchtensockel geeignet zum Betrieb eines Leuchtmittels in der Modullampenfassung verbunden ist, und wobei das Steuerungsmodul des Weiteren einen durch akustische Signale steuerbaren Schalter geeignet zum Unterbrechen der elektrischen Verbindung zwischen Modulleuchtensockel und Modullampenfassung umfasst. Die akustischen Signale können sich dabei durch Lautstärke, Frequenz oder durch ihren Inhalt (Spracherkennung) unterscheiden.

Das Steuerungsmodul gemäß der vorliegenden Erfindung stellt die zusätzliche Komponente her, die aufgrund ihrer Form mit Modulleuchtensockel und Modullampenfassung leicht in bestehende Leuchten zwischen Leuchtmittel und Leuchtenfassung von Jedermann ein ähnlicher Weise wie das Leuchtmittel selber eingesetzt werden kann.

Der Begriff "Leuchte" bezeichnet hierbei die Gesamtheit des lichtaussendenden Geräts umfassend Halterung, Stromzufuhr (Stromkabel an/in der Leuchte), Reflektoren, Gehäuse und das Leuchtmittel. Eine erfindungsgemäße Leuchte umfasst zusätzlich das Steuerungsmodul. Das Leuchtmittel (auch Lampe genannt) bezeichnet hier das Element, das das auszusendende Licht während des Betriebs des Leuchtmittels (Spannung liegt am Leuchtmittel an) erzeugt. Beispiele für Leuchtmittel sind konventionelle Glühlampen, Leuchtstofflampen, Kompaktleuchtstofflampen (sogenannte Energiesparlampen), LEDs, organische LEDs etc. Der Begriff "Leuchtenfassung" bezeichnet hierbei die mechanische Halterung, über die das Leuchtmittel in die Leuchte eingesetzt wird. Das entsprechende mechanische Gegenteil an dem Leuchtmittel (oder Lampe) wird als Lampensockel oder Sockel des Leuchtmittels bezeichnet. Die Halterung für die Leuchtmittel kann dabei sehr unterschiedlich ausgeführt sein. Beispielsweise haben gebräuchliche 230-V-Glühlampen einen E27-Sockel, der mittels Schraubgewinde in die entsprechende Leuchtenfassung eingeschraubt wird. Alternative könne Glühlampen auch sogenannte E14, E40 oder andere Sockel und die Leuchten die entsprechenden Leuchtenfassungen besitzen. Kompaktleuchtstofflampen können die gleichen Sockel wie die Glühlampen besitzen. Alternativ sind Kompaktleuchtstofflampen auch mit einem Bajonettsockel (beispielsweise B22 oder B22d) für eine entsprechende Bajonett-Leuchtenfassung ausgestattet. Leuchtstoffleuchten können die vorherigen Sockel oder Stecksockel, Stift-Stecksockel, Röhrensockel oder diese Sockel zusammen mit einem Vorschaltgerät besitzen. Die dafür geeigneten Leuchten haben die entsprechenden Leuchtenfassungen. Die Halogenlampen haben beispielsweise Stiftsockel oder Glasquetschsockel, deren Leuchten die entsprechenden Leuchtenfassungen. Die LEDs oder organischen LEDs können ebenfalls mit einem der voranstehend aufgeführten Sockel ausgestattet sein.

Der Modulleuchtensockel des Steuerungsmoduls kann je nach Anwendungsart für die Leuchte, in die das Steuerungsmodul eingesetzt werden soll, die geeignete Sockelform besitzen. Beispielsweise kann der Modulleuchtensockel für die jeweilige Anwendung ein Sockel aus der Gruppe der voranstehend angeführten Sockel (Sockeltypen für entsprechende Leuchtenfassungstypen) sein. Der Fachmann kann die Form des Modulleuchtensockels für die jeweilige Anwendung geeignet wählen und gegebenenfalls mit einem geeigneten Adapter anpassen. Die Modullampenfassung des Steuerungsmoduls ist das entsprechende Gegenstück für die mechanische Halterung des Sockels des Leuchtmittels in dem Steuerungsmodul. Je nach Form des Sockels des Leuchtmittels, das für den Einsatz in das Steuerungsmodul vorgesehen ist, kann die Form der Modullampenfassung des Steuerungsmoduls die geeignete Form besitzen. Der Modullechtensockel und die Modullampenfassung können je nach Ausführungsform für die gleichen Sockel und Fassungen oder für unterschiedlichen Sockel und Fassungen vorgesehen sein. Hierbei kann das Steuerungsmodul auch als Adapter zwischen der Leuchtenfassung und des Sockel des Leuchtmittels dienen, sofern die Leuchtenfassung und der Sockel des Leuchtmittels nicht direkt kompatibel sind. In dieser Ausführungsform sind der Modulleuchtensockel und die Modullampenfassung für unterschiedlichen Sockel/Leuchtenfassungstypen ausgeführt. Damit das Leuchtmittel im Steuerungsmodul betrieben werden kann, d.h. eine geeignete Spannung an das Leuchtmittel angelegt werden kann, umfasst das Steuerungsmodul eine geeignete elektrischen Verbindung zwischen dem Modulleuchtensockel und der Modullampenfassung. Diese elektrische Verbindung kann gegebenenfalls noch weitere Komponenten umfassen, die den Anschluss von Leuchtmitteln an die Leuchte über das Steuerungsmodul ermöglichen, die ohne das dazwischen angeordnete Steuerungsmodul wegen ihrer Sockelform nicht in die Lampenfassung passen würden. Der Fachmann ist in der Lage, für die Ausführung des Steuerungsmoduls als Adapter die elektrische Verbindung mit den eventuell zusätzlich benötigten elektrischen Komponenten auszustatten. Ist das Steuerungsmodul nicht als Adapter, sondern nur als zwischengeschaltete (dazwischen angeordnete) Komponente ausgeführt, so kann die elektrische Verbindung als einfacher elektrisch leitfähiger Pfad zwischen den elektrischen Kontakten des Modulleuchtensockels und den Kontakten der Modullampenfassung ausgeführt sein. In diesem elektrischen Pfad ist natürlich der steuerbare Schalter zum Unterbrechen dieser elektrischen Verbindung angeordnet.

Der steuerbare Schalter kann jeder Typ von Schalter sein, der geeignet ist, die elektrische Verbindung als Reaktion auf ein akustisches Signal zu unterbrechen. Geeignete Schalter sind beispielsweise Halbleiterschalter oder Chips. Zur Unterbrechung der elektrischen Verbindung ist der Schalter entweder in der elektrischen Verbindung angeordnet, oder der Schalter steuert einen solchen Unterbrecher, der in der elektrischen Verbindung angeordnet ist. Der steuerbare Schalter ist dabei entweder selbst zum Empfang der akustischen Signale und einer entsprechenden Steuerung aufgrund der empfangenen akustischen Signale vorgesehen, oder der Schalter empfängt entsprechende Signale von einer Komponente, die die akustischen Signale empfängt. Im letzteren Fall werden die akustischen Signale in geeignete Steuersignale für den steuerbaren Schalter umgewandelt und an diesen beispielsweise elektromagnetisch oder optisch übermittelt. Der Fachmann ist in der Lage, einen geeigneten Schalter im Rahmen der vorliegenden Erfindung zu wählen. Die akustischen Signale könne Signale aller Art sein, die sich durch Schall ausbreiten. Hierbei können die akustischen Signale bestimmte Geräusche oder einen Geräuschpegel darstellen. In anderen Ausführungsformen können die akustischen Signale auch gesprochene Worte umfassen, die als akustische Befehle dienen können.

Das Steuerungsmodul gemäß der vorliegenden Erfindung als eine zu bestehenden Leuchten hinzufügbare Komponente gemäß der vorliegenden Erfindung ermöglicht eine individuelle Steuerung von Leuchten, insbesondere auch in einem Beleuchtungssystem, ohne dass aufwendige Änderungen an den Leuchten oder an dem Beleuchtungssystem von Spezialpersonal vorgenommen werden müssen. Das Steuerungsmodul kann entsprechend der Leuchtmittel von Jedermann in die Leuchtenfassungen eingesetzt und danach mit den entsprechenden Leuchtmitteln bestückt werden. Die mit den Steuerungsmodulen ausgestatteten Leuchten können mittels akustischer Signale je nach verwendetem steuerbarem Schalter abgeschaltet und/oder angeschaltet werden. Insofern ist es in einer Ausführungsform auf einfache Weise möglich, über das Vorhandensein eines Geräuschpegels in einem Raum auf das Vorhandensein von Personen oder durchgeführten Arbeitsabläufen zu schließen und für den Fall der Ruhe in diesem Raum die Leuchten abzuschalten oder runterzudimmen, sofern entsprechend der Ruhe der Geräuschpegel unter eine untere Grenze fällt. Analog können die Leuchten beispielsweise nach Überschreiten eines Geräuschpegels wieder eingeschaltet werden. In einer Ausführungsform schaltet sich die Leuchte nach akustischem Einschalten selbst wieder aus oder dimmt sich herunter, solange kein weiteres akustisches Signal mehr empfangen wird. Insofern ermöglicht die vorliegende Erfindung eine Energieeinsparung bei der Raumbeleuchtung für verlassene Räume, selbst wenn die Raumbeleuchtung nicht bereits durch andere Maßnahmen abgestellt sein sollte, und eine verbesserte Bedienerfreundlichkeit beim Ein- und Ausschalten.

In einer Ausführungsform ist der steuerbare Schalter mit einem Mikrophonmodul, umfassend mindestens ein Mikrophon zum Empfangen der akustischen Signale, verbunden. Mit einem Mikrophon, das gegebenenfalls räumlich entfernt vom steuerbaren Schalter angeordnet ist, kann das akustische Signal zur Steuerung des steuerbaren Schalters wesentlich genauer empfangen und verarbeitet werden. Die Entfernung zwischen Mikrophon und steuerbarem Schalter kann in einer Ausführungsform wenige Millimeter betragen, so dass das Mikrophon im gleichen Gehäuse wie der steuerbare Schalter angeordnet ist. In einer anderen Ausführungsform kann das Mikrophon auch als separate Komponente des Steuerungsmoduls ausgebildet sein, das mit dem steuerbaren Schalter über eine geeignete Verbindung zur Signalübertragung verbunden ist. Beispielsweise kann das Mikrophon im Bereich einer Tür oder im Bereich eines Arbeitsplatzes angeordnet sein, während die Leuchte mit Steuerungsmodul beispielsweise an der Decke des Raumes angeordnet ist. In einer Ausführungsform besitzt die Verbindung zwischen Mikrophonmodul und steuerbarem Schalter dazu eine Länge, die geeignet ist, das Mikrophon außerhalb der Leuchte anzuordnen. Die Länge bezeichnet hier die mögliche Reichweite für eine solche Signalübertragung. Die Länge kann je nach Art der Signalübertragung zwischen einigen 10 cm bis hin zu einigen Metern betragen. Die Signalübertragung zwischen Mikrophon und Steuerungsmodul mit steuerbarem Schalter kann beispielsweise drahtlos mittels Infrarot-Datenübertragung oder einer Funkverbindung oder mittels eines Datenkabels vorgenommen werden. Das Steuerungsmodul umfasst dazu entsprechende Empfangsmodule für den Empfang der vom Mikrophon übertragenen Signale. Solche Empfangsmodule sind dem Fachmann bekannt, so dass er sie im Rahmen der vorliegenden Erfindung für das Steuerungsmodul je nach Anwendung geeignet wählen wird.

In einer Ausführungsform umfasst das Mikrophonmodul einen Permanentmagneten zum Befestigen des Mikrophonmoduls an der Außenseite der Leuchte. Gerade für kompakt gebaute Leuchten mit einem Steuerungsmodul, das nach Einsatz in die Leuchte von dem Gehäuse der Leuchte teilweise umschlossen wird, könnte der Empfang der akustischen Signale behindert werden. Ein Mikrophonmodul, das eine Anbringung desselben an einem Punkt an der Außenseite der Leuchte ermöglicht, erlaubt einen verbesserten Empfang der akustischen Signale. Gegebenenfalls kann der Anwender den Anbringungsort des Mikrophonmoduls für einen optimalen Empfang der akustischen Signale geeignet wählen. Da viele Teile der Leuchtengehäuse metallische Bestandteile besitzen, ist die Halterung der Mikrophonmoduls mittels magnetischer Kraft vorteilhaft. In einer alternativen Ausführungsform kann das Mijkrophonmodul auch eine adhäsive Fläche umfassen, mit der das Mikrophonmodul an einer geeigneten Position auf eine Leuchte geklebt wird.

In einer Ausführungsform umfasst der steuerbare Schalter einen Steuerchip zur Steuerung des steuerbaren Schalters. Somit können verschiedene Reaktionen des Schalters für verschiedene akustische Signale mittels des Steuerchips und der im Steuerchip gespeicherten Zuordnung von Signalen zu Reaktionen ausgeführt werden. In einer Ausführungsform ist der Steuerchip dabei so ausgestaltet, dass er die Steuerung des steuerbaren Schalters vornimmt, falls eine Signalstärke des akustischen Signals einen Schwellwert überschreitet oder unterschreitet. Der Schwellwert kann vom Fachmann entsprechend der Anwendungsbedingungen für das Steuerungsmodul geeignet gewählt werden. In einer Ausführungsform kann der Schwellwert beispielsweise mittels eines Drehschalters am Steuerungsmodul vom Anwender modifiziert werden. In einer anderen Ausführungsform ist der Steuerchip so ausgestaltet, dass er eine Sprachsteuerung des steuerbaren Schalters mittels Unterscheidung verschiedener akustischer Signale ermöglicht. Beispielsweise können Befehle wie "An" oder "Licht an" oder "Aus" oder "Licht aus" vom Steuerchip erkannt und, entsprechend kann der steuerbare Schalter gesteuert werden. In einer alternativen Ausführungsform kann auch die Frequenz der akustischen Signale zu einer Befehlsübermnittlung verwendet werden, beispielsweise können Pfeiftöne bestimmten Befehlen wie "Aus" oder "Licht an" entsprechen.

In einer weiteren Ausführungsform ist der Steuerchip mit einem Zeitschalter zur Einstellung einer Zeitverzögerung beim Steuern des steuerbaren Schalters verbunden. Diese Zeitverzögerung ist beispielsweise in Räumen vorteilhaft, die in kurzen Zeitabständen von Personen betreten werden. Würde die Raumbeleuchtung sofort nach Verlassen des Raumes und eines entsprechenden Absinkens des Geräuschpegels unter einen Schwellwert abgeschaltet und nach einem sehr kurzen Zeitraum aufgrund einer eintretenden Person und eines entsprechend ansteigenden Geräuschpegels wieder angeschaltet, so könnte daraus eine ständig ein- und ausgeschaltete Raumbeleuchtung resultieren, was für die Lebensdauer der Leuchtmittel unvorteilhaft ist. Bevorzugt ist die Zeitverzögerung so eingestellt, dass dadurch ein kurz aufeinander folgendes Verlassen des Raumes und Wiedereintreten in den Raum mit konstanter Raumbeleuchtung überbrückt werden kann. Der Fachmann kann im Rahmen der vorliegenden Erfindung die Zeitintervalle dazu geeignet wählen. Der Zeitschalter kann dabei als Drehschalter an dem Steuerungsmodul ausgeführt sein, wobei der Zeitschalter beispielsweise mittels eines Schraubendrehers bedient werden kann. Die Zeitverzögerung kann in einer Ausführungsform beispielsweise zwischen 2 min, 1 min, 0,5 min und 0,0 Minuten gewählt werden. In einer anderen Ausführungsform kann die Zeitverzögerung zwischen 2 Stunden, 1 Stunde, 0,5 Stunden und 0,0 Stunden gewählt werden. Diese Auswahl kann stufenlos oder gerastert erfolgen.

In einer weiteren Ausführungsform ist das Steuerungsmodul als Steuerungskappe zum Einsatz in Leuchten mit Entladungsröhren als Leuchtmittel mit zumindest einer kappenförmigen Hülse zum Aufstecken auf zumindest einen der Stromkontakte der Entladungsröhre ausgebildet, wobei die Steuerungskappe so geformt ist, dass die Entladungsröhre mit aufgesteckter Steuerungskappe in dieselbe Leuchte eingesetzt werden kann, die auch für die Entladungsröhre ohne Steuerungskappe vorgesehen ist, wobei zumindest die kappenförmige Hülse einen isolierenden Kern besitzt sowie mindestens einen elektrisch leitfähigen Pfad als die elektrische Verbindung zwischen der Innenseite der kappenförmigen Hülse mit der Außenseite der kappenförmigen Hülse, wobei im elektrisch leitfähigen Pfad der steuerbare Schalter angeordnet ist. Leuchtstoffröhren erreichen je nach Lampentyp eine Lichtausbeute von etwa 45 bis 100 Lumen pro Watt und sind damit zur Beleuchtung von großen Räumen, beispielsweise Lagerhallen, Straßentunnel oder andere Räume, besonders geeignet. Bevorzugt werden diese Räume mit einer großen Anzahl an Leuchten mit Entladungsröhren (Entladungsleuchten), beispielsweise Leuchtstoffleuchten, ausgestattet. Die Steuerungskappe ermöglicht gerade für Entladungsröhren mit einem üblicherweise auf die Länge der Entladungsröhre angepassten Leuchtengehäuse die Weiterverwendung der bestehenden Entladungsröhren, so dass keine speziellen Entladungsröhren für die Nachrüstung mit Steuerungsmodulen ausgeführt als Steuerungskappen neu angeschafft werden müssen. Das Aufstecken der Steuerungskappen auf die betreffenden Entladungsröhren kann von Jedermann durchgeführt werden und verursacht somit nur geringe oder keine Arbeitskosten.

Entladungsröhren bezeichnen hier Leuchtmittel, die eine gasgefüllte Röhre zur Anlegung einer bauartspezifischen Mindestspannung zur Erzeugung einer Gasentladung innerhalb der Röhre und der damit verbundenen Aussendung von Licht umfassen. Entladungsröhren umfassen eine Vielzahl von unterschiedlichen Varianten an Leuchtmitteln. Eine Entladungsröhre gemäß der vorliegenden Erfindung ist beispielsweise eine Niederdruckgasentladungslampe, bevorzugt eine Leuchtstoffröhre. Der Begriff Entladungsröhre im Sinne der vorliegenden Erfindung umfasst des Weiteren auch eine Kombination aus einer kurzen Entladungsröhre und einem aufgesetzten Längenadapter (oder Adapter) zum Einsatz dieser Kombination in eine Leuchtenfassung (Entladungsleuchte). Insofern bezeichnet der Ausdruck "aufstecken auf zumindest einen der Stromkontakte der Entladungsröhre" ebenfalls sowohl das Aufstecken der kappenförmigen Hülse auf die Stromkontakte der kurzen Entladungsröhre als auch auf die Stromkontakte des auf die kurze Entladungsröhre aufgesetzten Adapters.

Leuchtstoffleuchten umfassen neben der in die Lampenfassung der Leuchtstoffleuchte eingesetzten Leuchtstoffröhre ein Vorschaltgerät und einen Starter zum Einschalten der Leuchtstoffröhre. Die eingesetzte Leuchtstoffröhre schließt jeweils über die beiden Elektroden an den beiden Enden der Leuchtstoffröhre an zwei Stellen einen elektrischen Kreis von der Leuchtstoffleuchte zur externen Spannungsquelle, der u.a. den Starter und eine Drosselspule umfasst. Nach Einschalten der Leuchte fließt noch kein Strom über die Leuchtstoffröhre, so dass die volle Netzspannung am Starter anliegt. Erst nach ohmscher Erwärmung der Elektroden durch den Stromfluss und dem Startvorgang durch den Starter zündet eine Gasentladung im Inneren der Leuchtstoffröhre zwischen den Elektroden. Die aufgesteckte Steuerungskappe ist über den steuerbaren Schalter in der Lage, diesen Stromkreis zu unterbrechen, so dass die Leuchtstoffröhre nicht leuchten (brennen) kann.

Der Ausdruck "aufstecken" bezeichnet hier alle Arten von Befestigen, wobei zumindest eine der Stromkontakte der Entladungsröhre so von der Steuerungskappe umschlossen wird, dass dieser Stromkontakt alleine keine elektrische Verbindung zur Entladungsleuchte mehr herstellen kann. Dieser elektrische Kontakt kann vom Stromkontakt nach dem Aufstecken nur über den elektrischen Pfad der Steuerungskappe hergestellt werden. Als Stromkontakte der Entladungsröhre werden die typischerweise aus der Entladungsröhre herausragenden elektrisch leitfähigen Pins oder Beine bezeichnet. Die Steuerungskappe stellt somit einen zusätzlichen individuellen Schalter zu dem bisher vorhandenen Schalter im Beleuchtungssystem dar.

Die Steuerungskappe besitzt vorzugsweise eine zumindest kappenähnliche (kappenförmige) Form, wobei zumindest ein Stromkontakt von einer kappenförmigen Hülse umschlossen wird. Der Ausdruck "kappenförmig" bezeichnet hier eine geometrische Form mit einem Hohlraum zum Aufnehmen eines Stromkontaktes, der nur zu einer Seite geöffnet ist (die Seite, wo der Stromkontakt hineingeschoben wird). So wird verhindert, dass der Stromkontakt nach Aufstecken der Steuerungskappe aus der Hülse herausragen kann. Die kappenförmige Hülse ist dabei vorzugsweise zylinderförmig mit einem inneren Hohlraum zum Aufnehmen eines der Stromkontakte. Um eine isolierende Wirkung durch die kappenartige Hülse zu erreichen, muss die Steuerungskappe zumindest im Bereich der kappenförmigen Hülse zwischen der Außen- und Innenseite der Hülse aus einem isolierenden Material, beispielsweise Plastik, bestehen. Als die Innenseite der Hülse wird die Seite bezeichnet, die den Stromkontakt umschließt. Entsprechend ist die andere Seite der Hülse deren Außenseite. Die Oberflächen der Hülse können innen wie außen aus einer elektrisch leitfähigen Schicht, einem Streifen oder einer anders geformten elektrisch leitfähigen Struktur bestehen. Diese elektrisch leitfähigen Strukturen müssen so beschaffen sein, dass sie einen geschlossenen elektrisch leitfähigen Pfad vom Stromkontakt zur Außenseite der Hülse bereitstellen, damit die Entladungsröhre mit der außen leitfähigen kappenförmigen Hülse in die Lampenfassung hineingesteckt werden kann und der Betriebsstrom der Entladungsröhre an diese über die außen elektrisch leitfähige Hülse, den elektrisch leitfähigen Pfad und den Stromkontakt der Entladungsröhre angelegt werden kann. Der elektrisch leitfähige Pfad kann hier jede geeignete Form besitzen. Beispielsweise könnte er eine auf die Steuerungskappe aufgedruckte Leiterbahn oder eine einfache Kabelverbindung sein. Der Fachmann kann im Rahmen der vorliegenden Erfindung auch andere geeignete elektrische Pfade wählen.

In einer Ausführungsform besitzt die Steuerungskappe eine der Entladungsröhre zugewandte zylinderförmige erste Seite und eine der Lampenfassung zugewandte zweite Seite, wobei die zumindest eine kappenförmige Hülse in Richtung der Lampenfassung aus der zweiten Seite herausragt. Typischerweise haben Entladungsröhren einen zumindest in Näherung zylinderartigen Querschnitt. Die zylinderförmige erste Seite eignet sich somit besonders für eine eng an die Entladungsröhre anliegende und damit wenig Raum verbrauchende Steuerungskappe. Die zweite Seite kann im Prinzip jede Form besitzen, die geeignet ist, die Entladungsröhre zusammen mit der Steuerungskappe in die Lampenfassung einsetzen zu können. Bevorzugt ist die Steuerungskappe so geformt, dass die Distanz zwischen erster und zweiter Seite (Dicke der Steuerungskappe) gering ist, beispielsweise einige Millimeter. Die Dicke muss allerdings eine Mindestdicke betragen, so dass der elektrische Pfad auf der ersten Seite keinen direkten elektrischen Kontakt durch die Steuerungskappe hindurch zur zweiten Seite hat. Diese Mindestdicke hängt vom Material der Steuerungskappe außerhalb des oder der elektrischen Pfade ab und kann umso dünner sein, desto höherohmig das Material der Steuerungskappe ist. In einer bevorzugten Ausführungsform ist die erste Seite so geformt, dass die Steuerungskappe auf der Entladungsröhre mittels Passsitz zu befestigen ist. Damit kann die Steuerungskappe im Betrieb nicht verrutschen und die Steuerfunktion der Steuerungskappe ist zuverlässig.

In einer weiteren Ausführungsform verläuft der leitfähige Pfad zumindest teilweise an der Oberfläche der Steuerungskappe. Dies ermöglicht die Verwendung von auf die Steuerungskappe aufgedruckten Leiterbahnen als elektrisch leitfähiger Pfad oder zumindest als ein Teil des elektrisch leitfähigen Pfads. Alternativ kann der elektrisch leitfähige Pfad auch in Form von Kabeln, die mit einer elektrisch leitfähigen Beschichtung im Bereich der Innenseite und der Außenseite der kappenförmigen Hülse verbunden sind (z.B. durch eine Lötverbindung), verwirklicht werden. In einer weiteren Ausführungsform umfasst der leitfähige Pfad des Weiteren eine Kabelverbindung, an deren Ende der steuerbare Schalter angeordnet ist. In einer bevorzugten Ausführungsform besitzt dabei die Kabelverbindung eine Länge, die geeignet ist, den steuerbaren Schalter außerhalb der Entladungsleuchte anzuordnen. Bei Entladungsleuchten - beispielsweise als Deckenleuchten- kann hier der steuerbare Schalter aus der Deckenleuchte heraushängen und ist so beispielsweise für eine optische Signalübertragung zur Steuerung des steuerbaren Schalters gut zugänglich. Außerdem werden die Betriebseigenschaften eines steuerbaren Schalters bei einer ausreichenden Entfernung zum Leuchtmittel nicht von der üblicherweise erhöhten Betriebstemperatur des Leuchtmittels negativ beeinflußt.

Die Erfindung betrifft des Weiteren eine Leuchte mit einem Steuerungsmodul gemäß der vorliegenden Erfindung. Die Steuerungsmodule können sowohl separat als auch bereits eingesetzt in Leuchten aller Art vertrieben werden. Die beanspruchte Leuchte bietet die voranstehend beschriebenen Vorteile durch das vorhandene Steuerungsmodul im Vergleich zu einer gewöhnlichen Leuchte ohne ein solches Steuerungsmodul. Die beanspruchte Leuchte ist bei gleicher Raumbeleuchtungsqualität mit geringerem Energieaufwand und einer höheren Bedienerfreundlichkeit betreibbar.

Die Erfindung betrifft des Weiteren ein Beleuchtungssystem mit einer Vielzahl an Leuchten mit mindestens einer Leuchte gemäß der vorliegenden Erfindung und einer Steuerungseinheit verbunden mit der Leuchte mit Steuerungsmodul, wobei das Steuerungsmodul zur Weiterleitung der empfangenen akustischen Signale an die Steuerungseinheit zum Ansteuern der Leuchten ohne Steuerungsmodule vorgesehen ist. Somit erlaubt das Nachrüsten einer einzelnen Leuchte mit einem Steuerungsmodul gemäß der vorliegenden Erfindung das Steuern eines Beleuchtungssystems mit einer Vielzahl an Leuchten, sofern eine Steuerungseinheit vorhanden ist. Diese Steuerungseinheit kann das Steuern der Leuchten ohne Steuerungsmodul auf jede geeignete Art, beispielsweise über mit diesen Leuchten verbundenen bekannten digitalSTROM-Chips, durchführen. Die Signale der Steuerungseinheit an die anderen Leuchten beziehungsweise an deren Empfangseinheiten können beispielsweise elektrisch oder optisch übertragen werden.

In einer Ausführungsform umfasst das Steuerungsmodul eine mit dem Steuerchip verbundene Sendeeinheit zur Aussendung elektrischer Steuersignale an die Steuerungseinheit des Beleuchtungssystems zum Steuern der Leuchten ohne Steuerungsmodule analog zu den akustischen Signalen nach geeigneter Ansteuerung durch den Steuerchip. Somit kann das empfangene akustische Signal auf geeignete Weise an die Steuerungseinheit über die vorhandenen elektrischen Leitungen des Beleuchtungssystems übertragen werden und das gesamte Belechtungssystem akustisch über beispielsweise nur ein vorhandenes Steuerungsmodul zusammen mit der Steuerungseinheit anhand der anders weitergeleiteten Signale gesteuert werden.

Die Erfindung betrifft des Weiteren ein Verfahren zum Nachrüsten von Leuchten mit mindestens einer Leuchtenfassung mit einem Steuerungsmodul zum Steuern der Leuchten gemäß der vorliegenden Erfindung, wobei das Steuerungsmodul einen Modulleuchtensockel geeignet zum Einsetzen in die Leuchtenfassung und eine Modullampenfassung geeignet zum Einsatz eines Sockels eines Leuchtmittels in die Modullampenfassung umfasst und wobei die Modullampenfassung elektrisch mit dem Modulleuchtensockel geeignet zum Betrieb eines Leuchtmittels in der Modullampenfassung verbunden ist, umfassend die Schritte
- Entnehmen eines Leuchtmittels aus einer Leuchte,
- Einsetzen des Modulleuchtensockels des Steuerungsmoduls in die Leuchtenfassung der Leuchte,
- Einsetzen des Sockels des Leuchtmittels in die Modullampenfassung des Steuerungsmoduls, und
- Steuern der Leuchte mittels akustischer Signale über einen steuerbaren Schalter geeignet zum Unterbrechen der elektrischen Verbindung zwischen Modulleuchtensockel und Modullampenfassung.

Es ist gerade einer der Vorteile der vorliegenden Erfindung, dass die Schritte des Entnehmens und des Einsetzens von Jedermann ohne vorausgesetzte Spezialkenntnisse durchgeführt werden können und dass das Steuern der Leuchte automatisch ohne benötigtes Zutun von Bedienpersonal ausgeführt wird. Gegebenenfalls kann ein Bediener manche voranstehend angeführten Parameter wie Zeitverzögerung und Geräusch-Schwellwerte an entsprechenden Drehschaltern des Steuerungsmoduls nachjustieren, sofern es gewünscht ist. Für den Betrieb des Steuerungsmoduls bzw. einer Leuchte mit Steuerungsmodul ist dies aber keine Voraussetzung. Die Schritte des Einsetzens können dabei auch in getauschter Reihenfolge vorgenommen werden.

In einer Ausführungsform umfasst das Verfahren den Schritt des Steuerns der Leuchte mittels einer Sprachsteuerung, die eine Unterscheidung verschiedener akustischer Signale mittels eines geeigneten Steuerchips zur Steuerung des steuerbaren Schalters ermöglicht.

### Kurzbeschreibung der Zeichnungen

Diese und andere Aspekte der vorliegenden Erfindung sind in den Zeichnungen im Detail dargestellt.
- Abb.1:: eine Ausführungsform des Steuerungsmoduls gemäß vorliegender Erfindung mit einem E27 Modulleuchtensockel.
- Abb.2:: eine Ausführungsform des Steuerungsmoduls als Steuerungskappe für Entladungsröhren in perspektivischer Ansicht der ersten und zweiten Seite der Steuerungskappe.
- Abb.3:: eine Ausführungsform der erfindungsgemäßen Leuchte mit einem am Ende einer Kabelverbindung angeordneten Mikrophonmodul, das an der Außenseite der Leuchte befestigt ist.
- Abb.4:: eine Ausführungsform des Beleuchtungssystems gemäß vorliegender Erfindung.
- Abb.5:: eine Ausführungsform des Verfahrens zum Nachrüsten von Leuchten mit einem Steuerungsmodul gemäß der vorliegenden Erfindung.

### Detaillierte Beschreibung von Ausführungsformen

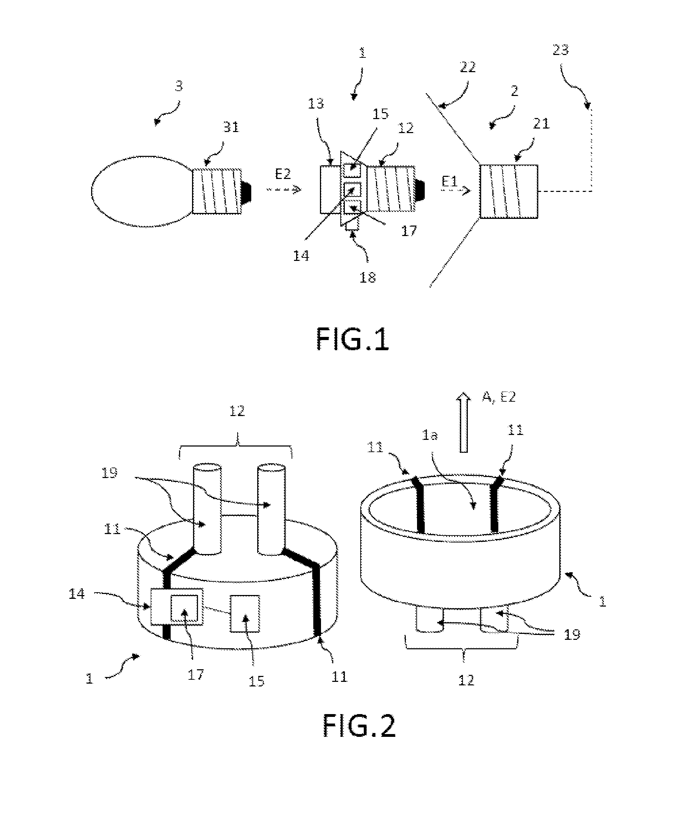

Abb.1 zeigt eine Ausführungsform des Steuerungsmoduls 1 gemäß vorliegender Erfindung mit einem E27-Modulleuchtensockel 12, das in eine Leuchte 2 eingesetzt wird E1. Die Leuchte 2 umfasst eine äußere Seite 22 (oder Leuchtengehäuse) in Form eines Reflektors für das Licht der Leuchte 2, einen Stromanschluss 23 (gestrichelt) zum Anlegen der Betriebspannung an das Leuchtmittel 3 und eine E27-Leuchtenfassung 21 zum Einsetzen E1 des Steuerungsmoduls 1 in die Leuchte 2. Aus dieser Leuchtenfassung 21 wurde vorher das Leuchtmittel 3 entnommen, um das Steuerungsmodul 1 in die Leuchte 2 einsetzen zu können. Das Steuerungsmodul 1 umfasst in dieser Ausführungsform den Modulleuchtensockel 12 zum Einsetzen E1 in die Leuchtenfassung 21 und die Modullampenfassung 13 zum Einsatz des entsprechenden E27-Sockels 31 beipielsweise einer Glühbirne oder einer Kompaktleuchtstoffröhre als Leuchtmittel 3. Die Modullampenfassung 13 ist dabei elektrisch mit dem Modulleuchtensockel 12 zum Betrieb der Glühbirne 3 in der Modullampenfassung 13 verbunden. Das Steuerungsmodul 1 umfasst zum Steuern der Leuchte einen steuerbaren Schalter 14 zum Unterbrechen der elektrischen Verbindung (hier ncht explizit gezeigt) zwischen Modulleuchtensockel 12 und Modullampenfassung 13 aufgrund eines akustischen Signals, das über das Mokrophonmodul 15 empfangen wurde und mit einem Steuerchip 17 verarbeitet wurde. Mit dem Steuerchip 17 wird der steuerbare Schalter 14 als Reaktion auf das akustische Signal gesteuert. Mit dem Zeitschalter 18 kann gegebenenfalls eine gewünschte Zeitverzögerung zwischen Empfangen des akustischen Signals und der Steuerung der Leuchte 2 durch den steuerbaren Schalter 14 eingestellt werden.

Abb.2 zeigt eine Ausführungsform des Steuerungsmoduls 1 gemäß vorliegender Erfindung als Steuerungskappe 1 zum Aufstecken A auf eine Entladungsröhre, die hier dem Leuchtmittel 3 entspricht. Die Steuerungskappe 1 besitzt hier zwei kappenförmige Hülsen 19, die auf die Stromkontakte 31 der Entladungsröhre aufgesteckt A werden und zusammen den Modulleuchtensockel 12 bilden. Hierbei ist die Steuerungskappe 1 so geformt, dass die Entladungsröhre mit aufgesteckter Steuerungskappe 1 in dieselbe Entladungsleuchte (entspricht der Leuchte 2) eingesetzt werden kann, die auch für die Entladungsröhre ohne Steuerungskappe 1 vorgesehen ist. Für eine erfolgreiche Isolation der Stromkontakte gegen einen direkten Kontakt zur Leuchtenfassung 21 hin besitzen zumindest die kappenförmigen Hülsen 19 jeweils einen elektrisch isolierenden Kern. Alternativ kann die gesamte Steuerungskappe 1 einen elektrisch isolierenden Kern besitzen oder vollständig aus elektrisch isolierendem Material gefertigt sein. Die Steuerungskappe 1 ist hier so geformt, dass sie mit ihrer Innenseite 1a mittels Passsitz auf der Entladungsröhre sitzt und somit zuverlässig einen elektrischen Kontakt zwischen der Entladungsröhre und der Leuchtefassung 21 herstellen kann. Die Länge der Entladungsröhre ohne Steuerungskappe 1 ist nur unwesentlich kürzer als die Länge der Entladungsröhre 3 mit Steuerungskappe 1, so dass die Entladungsröhre mit Steuerungskappe 1 weiterhin in die für die Entladungsröhre vorgesehene Entladungsleuchte 2 eingesetzt werden kann.

Abb. 2 zeigt eine zylinderförmige Ausführungsform der Steuerungskappe 1 gemäß vorliegender Erfindung in perspektivischer Ansicht mit einer Innenseite 1 a der Steuerungskappe 1. Die der inneren Seite 1 a gegenüberliegende Seite ist die äußere Seite der Steuerungskappe 1. Der Steuerungskappe 1 selbst besitzt eine Wandstärke, die durchaus auch weniger als 1 mm betragen kann. Die innere erste Seite 1a der Steuerungskappe 1 wird beim Aufstecken A der Steuerungskappe 1 über die Stromkontakte der Entladungsröhre 3 geschoben. Für einen passenden Sitz ist die Form der Steuerungskappe 1 an die Form der üblichen Entladungslampen angepasst. Da unterschiedliche Typen von Entladungsröhren, beispielsweise Leuchtstoffröhren unterschiedlichen Typs wie T5, T8 usw. Röhren mit verschiedenem Durchmesser sind, können die erfindungsgemäßen Steuerungskappen 1 unterschiedliche, auf die jeweiligen Durchmesser der Entladungs- bzw. Leuchtstoffröhren angepasste Zylinderformen besitzen. Der Fachmann ist in der Lage, die jeweils benötigte Größe der Steuerungskappe 1 im Rahmen der vorliegenden Erfindung auf die jeweilige Entladungsröhre (oder Entladungslampe) anzupassen. Zum Betreiben der Entladungsröhre besitzt die Steuerungskappe 1 zwei elektrisch leitfähige Pfade 11 zur elektrischen Verbindung der Innenseite der kappenförmigen Hülsen 19 mit den jeweiligen Außenseite der kappenförmigen Hülsen 19, wobei in diesem Ausführungsbeispiel in dem einen elektrisch leitfähigen Pfad 11 der steuerbare Schalter 14 zum Unterbrechen dieses elektrischen Pfades 11 angeordnet ist. Der steuerbare Schalter 14 umfasst einen Steuerchip 17, der empfangene Steuersignale verarbeitet und den Schalter 14 zum An- und Ausschalten der Entladungsröhre steuert. Die akustischen Signale werden beispielsweise über ein Mikrophonmodul 15 empfangen, das mit der steuerbaren Schalter 14 oder dem Steuerchip 17 verbunden ist.

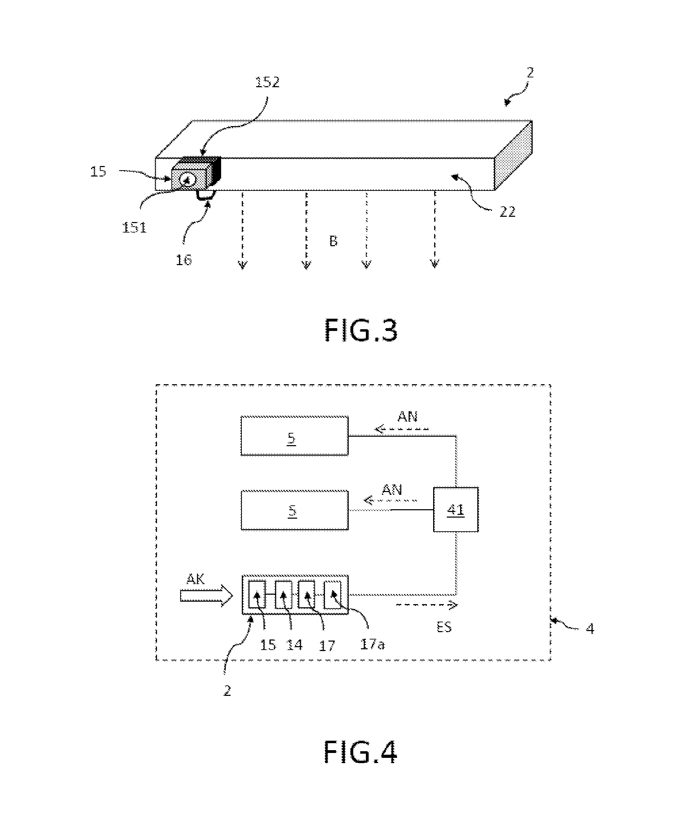

Abbildung 3 zeigt eine Ausführungsform des Steuerungsmoduls 1 gemäß vorliegender Erfindung, hier allerdings mit einem am Ende einer Kabelverbindung 16 angeordneten Mikrophonmodul 15. Die Kabelverbindung 16 besitzt eine geeignete Länge, damit der steuerbare Schalter 14 im Betrieb der Leuchte 2 mit akustischen Signalen AK versorgt werden kann, die außerhalb der Leuchte 2 empfangen werden und somit störungsfreier empfangen werden können. Der Ausdruck "außerhalb" schließt dabei auch die Außenseite 22 der Leuchte 2 ein. Die Befestigung an der Außenseite 22 der Leuchte 2 (beispielsweise eine Entladungsleuchte) hat unter anderem den Vorteil, dass das Mikrophonmodul 15 mit Mikrophon 151 zum Empfang der akustischen Signale AK nicht durch Gehäuseteile der Leuchte 2 gestört oder abgeschirmt werden kann. Damit eine solche Anordnung möglichst einfach zu erreichen ist, umfasst das Mikrophonmodul 15 einen Permanentmagneten 152 zum Befestigen des Mikrophonmoduls 15 an der Leuchte 2. Alternativ zur magnetischen Haltekraft kann eine feste Anordnung auch durch andere Verfahren, beispielsweise durch eine adhäsive Fläche am Mikrophonmodul 15 erreicht werden. Des Weiteren kann das Mikrophonmodul 15 einen Sender oder Sensor zum Senden oder Empfangen von anderen Steuersignalen, hier beispielsweise optische Steuersignale, von einer Steuerungseinheit eines Beleuchtungssystems, umfassen.

Abbildung 4 zeigt eine Ausführungsform des Beleuchtungssystems 4 gemäß vorliegender Erfindung mit drei Leuchten, wovon eine Leuchte 2 mit einem Steuerungsmodul 1 ausgestattet ist und die beiden anderen Leuchten 5 kein Steuerungsmodul 1 umfassen. Die Leuchte 2 wird wie bereits voranstehend beschrieben mittels akustischer Signale AK durch den steuerbaren Schalter 14 gesteuert. In dieser Ausführungsform besitzt die Leuchte 2 zum Steuern des steuerbaren Schalters 14 einen Steuerchip 17 und ein Mikrophonmodul 15. In dem Beleuchtungssystem 4 werden die verarbeiteten akustischen Signale von der Leuchte 2 mit Steuerungsmodul 1 über eine Sendeeinheit 17a als bespielsweise elektrische Steuersignale ES an die Steurungseinheit 41 des Beleuchtungssystems übermittelt. Die Steuerungseinheit 41 kann dabei mit einem Softwareprogramm wie beispielsweise digitalSTROM.org betrieben werden, mit dem man gegebenenfalls individuell die Leuchten 5 ohne Steuerungsmodul 1 zum Anschalten oder Abschalten ansteuern kann AN.

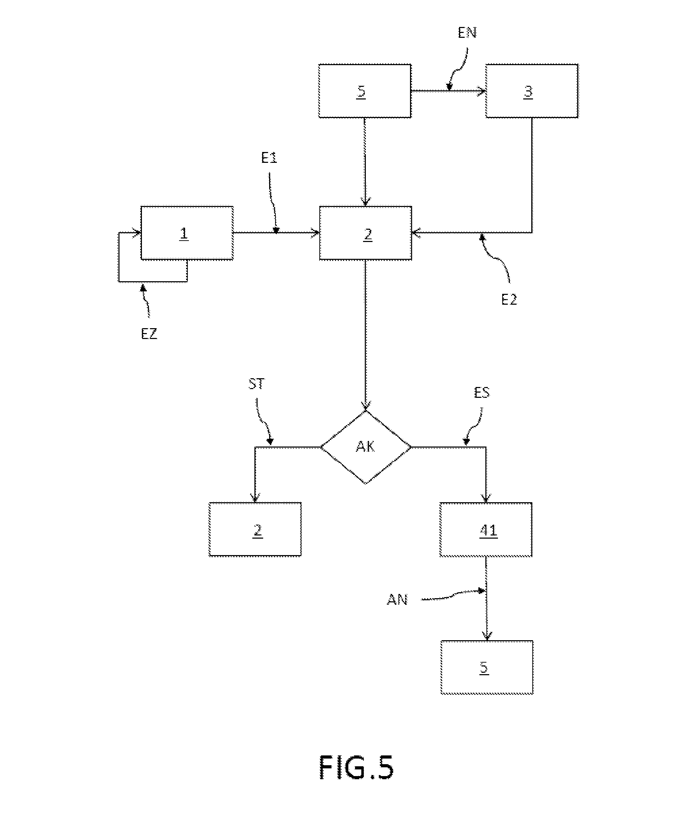

Abb.5 zeigt eine Ausführungsform des Verfahrens zum Nachrüsten von Leuchten mit einem Steuerungsmodul 1 gemäß der vorliegenden Erfindung. Zuerst wird aus einer Leuchte 5 ohne Steuerungsmodul 1 das Leuchtmittel 3 entnommen EN. Danach wird das Steuerungsmodul 1 mit dem Modulleuchtensockel 12 in die Leuchtenfassung 21 dieser Leuchte eingesetzt E1. Diese Leuchte ist nun eine Leuchte 2 mit Steuerungsmodul 1. Danach wird das Leuchtmittels 3 mit dem Sockel 31 in die Modullampenfassung 13 des Steuerungsmoduls 1 eingesetzt E2. Die Schritte E1 und E2 können auch in dem umgekehrten Reihenfolge durchgeführt werden, also zuerst das Einsetzen E2 des Leuchtmittels 3 in das Steuerungsmodul 1 und danach das Einsetzen E1 des Steuerungsmoduls 1 mit Leuchtmittel 3 in die Leuchtenfassung 21. Nachdem das Steuerungsmodul 1 in die Leuchte eingesetzt ist, kann die Leuchte 2 mittels akustischer Signale AK über den steuerbaren Schalter 14 gesteuert ST werden. Sofern die Leuchte 2 ein Teil eines Beleuchtungssystems 4 ist, werden die akustischen Signale AK nach deren Umwandlung mit Hilfe des Steuerchips 17 als elektrische Signale ES an die Steuerungseinheit 41 des Beleuchtungssystems 4 zur Ansteuerung AN der Leuchten 5 ohne Steuerungsmodul 1 des Beleuchtungssystems 4 übermittelt und die Leuchten 5 entsprechend angesteuert AN.

Die detaillierte Darstellung der Erfindung in diesem Abschnitt und in den Abbildungen ist als Beispiel für mögliche Ausführungsformen im Rahmen der Erfindung und daher nicht einschränkend zu verstehen. Insbesondere angegebene Größen sind auf die jeweiligen Betriebsbedingungen der Entladungsleuchte vom Fachmann anzupassen. Daher sind alle angegebenen Größen nur als Beispiel für bestimmte Ausführungsformen zu verstehen.

Alternative Ausführungsformen, die der Fachmann möglicherweise im Rahmen der vorliegenden Erfindung in Betracht zieht, sind vom Schutzbereich der vorliegenden Erfindung ebenfalls mit umfasst. In den Ansprüchen umfassen Ausdrücke wie "ein" auch die Mehrzahl. In den Ansprüchen angegebene Bezugszeichen sind nicht einschränkend auszulegen.

### Bezugszeichenliste

- 1: Steuerungsmodul
- 1 a: Innenseite des Steuerungsmoduls als Steuerungskappe
- 11: elektrische Verbindung zwischen dem Modulleuchtensockel und der Modullampenfassung
- 12: Modulleuchtensockel
- 13: Modullampenfassung
- 14: steuerbarer Schalter
- 15: Mikrophonmodul
- 151: Mikrophon
- 152: Permanentmagnet
- 16: Verbindung zwischen dem Mikrophonmodul und dem steuerbaren Schalter
- 17: Steuerchip
- 17b: Sendeeinheit verbunden mit dem Steuerchip
- 18: Zeitschalter
- 19: kappenförmige Hülse
- 2: Leuchte mit Steuerungsmodul
- 21: Leuchtenfassung
- 22: Außenseite der Leuchte
- 23: Stromanschluss der Leuchte
- 3: Leuchtmittel
- 31: Sockel des Leuchtmittels / Stromkontakt der Entladungsröhre
- 4: Beleuchtungssystem
- 41: Steuerungseinheit des Beleuchtungssystems
- 5: Leuchte ohne Steuerungsmodul

- A: Aufstecken der Steuerungskappe auf die Entladungsröhre
- AN: Ansteuern der Leuchten ohne Steuerungsmodul
- AS: akustisches Signal
- B: Licht zur Raumbeleuchtung
- E1: Einsetzen des Steuerungsmoduls in die Leuchte
- E2: Einsetzen des Leuchtmittels in das Steuerungsmodul
- EN: Entnehmen des Leuchtmittels aus der Leuchte
- ES: elektrisches Steuersignal
- EZ: Einstellen Zeitschalter
- SS: Signalstärke des akustischen Signals
- SW: Schwellwert für das akustische Signal

## Patentansprüche

1. Ein Steuerungsmodul (1) zum Steuern von Leuchten (2) mit zumindest einer Leuchtenfassung (21), wobei das Steuerungsmodul (1) einen Modulleuchtensockel (12) geeignet zum Einsetzen in die Leuchtenfassung (21) und eine Modullampenfassung (13) geeignet zum Einsatz eines Sockels (31) eines Leuchtmittels (3) in die Modullampenfassung (13) umfasst, wobei die Modullampenfassung (13) elektrisch mit dem Modulleuchtensockel (12) geeignet zum Betrieb eines Leuchtmittels (3) in der Modullampenfassung (13) verbunden ist, und wobei das Steuerungsmodul (1) des Weiteren einen durch akustische Signale (AS) steuerbaren Schalter (14) geeignet zum Unterbrechen der elektrischen Verbindung (11) zwischen Modulleuchtensockel (12) und Modullampenfassung (13) umfasst.

2. Das Steuerungsmodul (1) nach Anspruch 1,
**dadurch gekennzeichnet, dass** der steuerbare Schalter (14) mit einem Mikrophonmodul (15) umfassend mindestens ein Mikrophon (151) zum Empfangen der akustischen Signale verbunden ist.

3. Das Steuerungsmodul (1) nach Anspruch 2,
**dadurch gekennzeichnet, dass** die Verbindung (16) zwischen Mikrophonmodul (15) und steuerbarem Schalter (14) eine Länge besitzt, die geeignet ist, das Mikrophon (151) außerhalb der Leuchte (2) anzuordnen.

4. Das Steuerungsmodul (1) nach Anspruch 3,
**dadurch gekennzeichnet, dass** das Mikrophonmodul (15) einen Permanentmagneten (152) zum Befestigen des Mikrophonmoduls (15) an der Außenseite (22) der Leuchte (2) umfasst.

5. Das Steuerungsmodul (1) nach einem der voranstehenden Ansprüche, **dadurch gekennzeichnet, dass** der steuerbare Schalter (14) einen Steuerchip (17) zur Steuerung des steuerbaren Schalters (14) umfasst.

6. Das Steuerungsmodul (1) nach Anspruch 5,
**dadurch gekennzeichnet, dass** der Steuerchip (17) so ausgestaltet ist, dass er die Steuerung des steuerbaren Schalters (14) vornimmt, falls eine Signalstärke (SS) des akustischen Signals (AK) einen Schwellwert (SW) überschreitet oder unterschreitet.

7. Das Steuerungsmodul (1) nach Anspruch 5 oder 6,
**dadurch gekennzeichnet, dass** der Steuerchip (17) so ausgestaltet ist, dass er eine Sprachsteuerung des steuerbaren Schalters (14) mittels Unterscheidung verschiedener akustischer Signale (AK) ermöglicht.

8. Das Steuerungsmodul (1) nach einem der Ansprüche 5 bis 7, **dadurch gekennzeichnet, dass** der Steuerchip (17) mit einem Zeitschalter (18) zur Einstellung einer Zeitverzögerung beim Steuern des steuerbaren Schalters (14) verbunden ist.

9. Das Steuerungsmodul (1) nach einen der voranstehenden Ansprüche, **dadurch gekennzeichnet, dass** das Steuerungsmodul (1) als Steuerungskappe zum Einsatz in Leuchten (2) mit Entladungsröhren als Leuchtmittel (3) mit zumindest einer kappenförmigen Hülse (19) zum Aufstecken (A) auf zumindest einen der Stromkontakte (31) der Entladungsröhre (3) ausgebildet ist, wobei die Steuerungskappe (1) so geformt ist, dass die Entladungsröhre (3) mit aufgesteckter Steuerungskappe (1) in dieselbe Entladungsleuchte (2) eingesetzt werden kann, die auch für die Entladungsröhre (3) ohne Steuerungskappe (1) vorgesehen ist, wobei zumindest die kappenförmige Hülse (19) einen isolierenden Kern besitzt sowie mindestens einen elektrisch leitfähigen Pfad als die elektrische Verbindung (11) zwischen der Innenseite der kappenförmigen Hülse (19) mit der Außenseite der kappenförmigen Hülse (19), wobei im elektrisch leitfähigen Pfad (11) der steuerbare Schalter (14) angeordnet ist.

10. Das Steuerungsmodul (1) nach Anspruch 9,
**dadurch gekennzeichnet, dass**
die Steuerungskappe (1) auf der Entladungsröhre (3) mittels Passsitz zu befestigen ist.

11. Eine Leuchte (2) mit einem Steuerungsmodul (1) nach Anspruch 1.

12. Ein Beleuchtungssystem (4) mit einer Vielzahl an Leuchten (2, 5) mit mindestens einer Leuchte (2) nach Anspruch 11 und einer Steuerungseinheit (41) verbunden mit der Leuchte (2) mit Steuerungsmodul (1), wobei das Steuerungsmodul (1) zur Weiterleitung der empfangenen akustischen Signale (AK) an die Steuerungseinheit (41) zum Ansteuern (AN) der Leuchten (5) ohne Steuerungsmodule (1) vorgesehen ist.

13. Das Beleuchtungssystem (4) nach Anspruch 12,
**dadurch gekennzeichnet, dass** das Steuerungsmodul (1) eine mit dem Steuerchip (17) verbundene Sendeeinheit (17b) zur Aussendung elektrischer Steuersignale (ES) an die Steuerungseinheit (41) analog zu den akustischen Signalen (AK) nach geeigneter Ansteuerung durch den Steuerchip (17) umfasst.

14. Ein Verfahren zum Nachrüsten von Leuchten (2) mit mindestens einer Leuchtenfassung (21) mit einem Steuerungsmodul (1) zum Steuern der Leuchten (2) nach Anspruch 1, wobei das Steuerungsmodul (1) einen Modulleuchtensockel (12) geeignet zum Einsetzen in die Leuchtenfassung (21) und eine Modullampenfassung (13) geeignet zum Einsatz eines Sockels (31) eines Leuchtmittels (3) in die Modullampenfassung (13) umfasst und wobei die Modullampenfassung (13) elektrisch mit dem Modulleuchtensockel (12) geeignet zum Betrieb eines Leuchtmittels (3) in der Modullampenfassung verbunden ist, umfassend die Schritte
- Entnehmen (EN) eines Leuchtmittels (3) aus einer Leuchte (2),
- Einsetzen (E1) des Modulleuchtensockels (12) des Steuerungsmoduls (1) in die Leuchtenfassung (21) der Leuchte (2),
- Einsetzen (E2) des Sockels (31) des Leuchtmittels (3) in die Modullampenfassung (13) des Steuerungsmoduls (1), und
- Steuern (ST) der Leuchte (2) mittels akustischer Signale (AK) über einen steuerbaren Schalter (14) geeignet zum Unterbrechen der elektrischen Verbindung (11) zwischen Modulleuchtensockel (12) und Modullampenfassung (13).

15. Ein Verfahren nach Anspruch 14,
**dadurch gekennzeichnet, dass** der Schritt des Steuerns (ST) der Leuchte (2) eine Sprachsteuerung umfasst, die eine Unterscheidung verschiedener akustischer Signale (AK) mittels eines geeigneten Steuerchips (17) zur Steuerung des steuerbaren Schalters (14) ermöglicht.
